# EUROPEAN PATENT APPLICATION

(11) **EP 4 209 884 A1**
(43) Date of publication of application: **12.07.2023**
(21) Application number: 21868345.6
(22) Date of filing: 09.08.2021
(51) Int. Cl.: G06F 3/0488

(54) **SWIPE CONTROL METHOD FOR ELECTRONIC DEVICE, AND ELECTRONIC DEVICE**

(30) Priority: 15.09.2020 CN 202010969606
(71) Applicant: Huawei Technologies Co., Ltd., Shenzhen, Guangdong 518129 (CN)
(72) Inventor: JIANG, Dayuan, Shenzhen, Guangdong 518129 (CN); ZHONG, Jianfei, Shenzhen, Guangdong 518129 (CN)
(74) Representative: Huawei European IPR
(86) International application number: PCT/CN2021/111585
(87) International publication number: WO 2022/057517

(57) **Abstract**

Embodiments of this application relate to the technical field of electronic devices, and provide a swipe control method for an electronic device, and an electronic device. When a gesture conflict exists in the electronic device, the electronic device may be enabled to display an interface of another level. In the solution, the electronic device displays a first interface of a first application, where the first interface is the 1^{st} interface or the last interface of interfaces at a same level of the first application. Then, the electronic device may receive a first swipe operation of a user on the first interface, where the first swipe operation includes two swipe operations between which an interval is less than preset duration. In response to the first swipe operation, the electronic device may display a second interface. The second interface is an interface at an upper level of the first interface or an interface at a lower level of the first interface.

## Description

This application claims priority to Chinese Patent Application No. 202010969606.1, filed with the China National Intellectual Property Administration on September 15, 2020 and entitled "SWIPE CONTROL METHOD FOR ELECTRONIC DEVICE, AND ELECTRONIC DEVICE", which is incorporated herein by reference in its entirety.

### TECHNICAL FIELD

Embodiments of this application relate to the technical field of electronic devices, and in particular, to a swipe control method for an electronic device, and an electronic device.

### BACKGROUND

With development of science and technology, a lightweight electronic device (for example, a smart band or a smart watch) has become increasingly popular in daily life. Because the lightweight electronic device and a screen of the lightweight electronic device are small, there are not excessive button options on the lightweight electronic device for a user to operate the electronic device. Therefore, usually, the user needs to operate the lightweight electronic device by gestures.

However, when there is a control (for example, Swiper or Tab) in an interface displayed on the screen of the lightweight electronic device, and the control occupies the entire interface displayed on the lightweight electronic device, if the user operates the lightweight electronic device by gestures, a gesture conflict may occur.

For example, usually, the smart watch may return to an upper-level interface in response to a rightward swipe gesture entered by the user. However, when a picture A in Gallery is displayed in an interface of the smart watch, if the user swipes to the right, the smart watch switches the currently displayed picture to a picture B, instead of returning to an upper-level interface of the picture A (for example, an interface in which a Gallery icon is displayed). In other words, when the picture A in Gallery is displayed in the interface of the smart watch, the user cannot enable the smart watch to return to the upper-level interface by swiping rightwards. Therefore, when a gesture conflict exists in the electronic device, how to enable the electronic device to display an interface at another level becomes an urgent problem to be resolved.

### SUMMARY

Embodiments of this application provide a swipe control method for an electronic device. When a gesture conflict exists in the electronic device, the electronic device may be enabled to display an interface at another level.

According to a first aspect, embodiments of this application provide a swipe control method for an electronic device. The method may be applied to an electronic device on which a first application is installed, and the electronic device includes a display.

The electronic device may display a first interface of the first application, where the first interface is the 1^{st} interface or the last interface of interfaces at a same level of the first application. Then, the electronic device may receive a first swipe operation of a user on the first interface, where the first swipe operation includes two swipe operations between which an interval is less than preset duration. The electronic device may display a second interface in response to the first swipe operation, where the second interface is an interface at an upper level of the first interface or an interface at a lower level of the first interface.

Based on the foregoing technical solutions, when the electronic device displays the 1^{st} interface or the last interface (namely, the first interface) of the interfaces at the same level of the first application, the electronic device may, in respond to two swipe operations of the user on the first interface between which the interval is less than the preset duration, display an interface at an upper level of the first interface or an interface at a lower level of the first interface. In this way, although when the electronic device displays the 1^{st} interface or the last interface of the interfaces at the same level of the first application, the interface displayed by the electronic device cannot be switched between interfaces at the same level in response to a swipe operation of the user, according to the foregoing solutions, when the user performs two swipe operations between which the interval is less than the preset duration on the electronic device, the electronic device does not switch interfaces at a same level, but displays an interface at an upper level of the first interface or an interface at a lower level of the first interface.

Therefore, by using the technical solutions of this application, when a gesture conflict exists in the electronic device, the electronic device may still perform interface switching, for example, displaying an interface at another level. In addition, in the technical solutions of this application, the interval between the two swipe operations is limited to be less than the preset duration, so that recognition of the first swipe operation can be improved, and accuracy of recognizing the first swipe operation by the electronic device is improved.

With reference to the first aspect, in a possible design manner, the method in which the electronic device receives a first swipe operation of a user on the first interface includes: The electronic device receives one swipe operation of the user on the first interface, and records time at which the electronic device receives the swipe operation. Then, the electronic device receives, within the preset duration starting from the time recorded by the electronic device, a next swipe operation of the user on the first interface.

Based on the foregoing technical solutions, the electronic device records the time at which the swipe operation is received, and may determine, based on the time, that the next swipe operation received by the electronic device within the preset duration starting from the time is a swipe operation in the first swipe operation. In this way, recognition of the first swipe operation can be improved, and accuracy of recognizing the first swipe operation by the electronic device is improved.

With reference to the first aspect, in another possible design manner, a swipe distance of each of the two swipe operations is greater than a preset distance threshold.

To be specific, when the swipe distance of the swipe operation is greater than the preset distance threshold, the swipe operation may be a swipe operation included in the first swipe operation. It may be understood that the swipe distance of the swipe operation is limited, so that a case in which the electronic device responds to an accidental touch operation of the user can be avoided, thereby improving user experience.

With reference to the first aspect, in another possible design manner, the first swipe operation is a swipe operation in a first direction, and the second interface is the interface at the upper level of the first interface; or the first swipe operation is a swipe operation in a second direction, and the second interface is the interface at the lower level of the first interface. The first direction is opposite to the second direction.

For example, two side frames (for example, a left frame and a lower frame) that are perpendicular to each other on the electronic device are respectively used as an x-axis and a y-axis. The first direction may be a positive direction of the x-axis, and the second direction may be a negative direction of the x-axis. Alternatively, the first direction may be a negative direction of the y-axis, and the second direction may be a positive direction of the y-axis.

According to a second aspect, embodiments of this application provide a swipe control method for an electronic device. The method may be applied to an electronic device including a display.

The electronic device displays a first interface, where a first control is disposed in the first interface, and the first control is used to trigger, in response to a swipe operation, the electronic device to switch between interfaces at a same level. The electronic device disables the first control in response to a preset operation of a user on the first interface, so that the first control does not respond to the swipe operation, where the preset operation includes a touch and hold operation. In response to the first swipe operation of the user on the first interface, the electronic device may display a second interface, where the second interface is an interface at an upper level of the first interface or an interface at a lower level of the first interface.

Based on the foregoing technical solutions, in response to the preset operation of the user on the first interface, the electronic device may disable the first control. In other words, after the electronic device receives the swipe operation of the user, the interface displayed by the electronic device cannot be switched between interfaces at a same level. Further, in response to the first swipe operation of the user on the first interface, the electronic device may display an interface at an upper level of the first interface or an interface at a lower level of the first interface. In this way, although the interface displayed by the electronic device cannot be switched between interfaces at a same level in response to the first swipe operation of the user on the electronic device, according to the foregoing solutions, the electronic device may display an interface at an upper level of the first interface or an interface at a lower level of the first interface. Therefore, according to the technical solutions of this application, when a gesture conflict exists in the electronic device, the electronic device may still perform interface switching, for example, displaying an interface at another level.

With reference to the second aspect, in a possible design manner, the method in which the electronic device displays a second interface in response to the first swipe operation of the user on the first interface includes: if the electronic device receives a swipe operation within first preset duration starting from time at which the electronic device receives the preset operation, the electronic device displays the second interface in response to the swipe operation of the user on the first interface.

In other words, the first swipe operation is a swipe operation received by the electronic device within the first preset duration starting from the time at which the electronic device receives the preset operation. In the technical solutions of this application, the swipe operation is limited, so that recognition of the first swipe operation can be improved. This improves accuracy of recognizing the first swipe operation by the electronic device.

With reference to the second aspect, in another possible design manner, the method further includes: after the first preset duration starting from the time at which the electronic device receives the preset operation, the electronic device enables the first control, so that the first control responds to the swipe operation to trigger the electronic device to switch between interfaces at a same level.

In other words, after the first preset duration starting from the time at which the electronic device receives the preset operation, in response to the swipe operation of the user, the interface displayed by the electronic device is an interface at a same level of the first interface.

With reference to the second aspect, in another possible design manner, pressing duration of the touch and hold operation is greater than second preset duration.

It may be understood that, in the technical solutions of this application, pressing duration is limited, so that a case in which the electronic device responds to an accidental touch operation of the user is avoided, thereby improving user experience.

With reference to the second aspect, in another possible design manner, a swipe distance of the first swipe operation is greater than a preset distance threshold.

In other words, when the swipe distance of the swipe operation is greater than the preset distance threshold, the swipe operation may be a swipe operation included in the first swipe operation. It may be understood that the swipe distance of the swipe operation is limited, so that a case in which the electronic device responds to an accidental touch operation of the user is avoided, thereby improving user experience.

With reference to the second aspect, in another possible design manner, the first swipe operation is a swipe operation in a first direction, and the second interface is the interface at the upper level of the first interface; or the first swipe operation is a swipe operation in a second direction, and the second interface is the interface at the lower level of the first interface. The first direction is opposite to the second direction.

According to a third aspect, embodiments of this application provide an electronic device. A first application is installed on the electronic device; the electronic device includes a memory, a display, and a processor. The memory and the display are coupled to the processor. The first application is stored in the memory. The memory is further configured to store computer program code. The computer program code includes computer instructions; and when the computer instructions are performed by the processor, the electronic device performs the method according to the first aspect and any possible design manner of the first aspect.

According to a fourth aspect, embodiments of this application provide an electronic device. The electronic device includes a memory, a display, and a processor. The memory and the display are coupled to the processor; the memory is configured to store computer program code, and the computer program code includes computer instructions; and when the computer instructions are performed by the processor, the electronic device performs the method according to the second aspect and any possible design manner of the second aspect.

According to a fifth aspect, embodiments of this application provide a chip system, and the chip system is applied to an electronic device. The chip system includes one or more interface circuits and one or more processors. The interface circuit and the processor are connected through a line. The interface circuit is configured to receive a signal from the memory of the electronic device, and send the signal to the processor. The signal includes computer instructions stored in the memory. When the processor performs the computer instructions, the electronic device performs the method according to the first aspect or the second aspect and any possible design manner of the first aspect or the second aspect.

According to a sixth aspect, embodiments of this application provide a computer storage medium, where the computer storage medium includes computer instructions, and when the computer instructions are run on an electronic device, the electronic device is enabled to perform the method according to the first aspect or the second aspect and any possible design manner of the first aspect or the second aspect.

According to a seventh aspect, embodiments of this application provide a computer program product. When the computer program product runs on a computer, the computer is enabled to perform the method according to the first aspect or the second aspect, and any possible design manner of the first aspect or the second aspect.

It may be understood that for beneficial effects that can be achieved by the electronic device according to the third aspect or the fourth aspect and any possible design manner of the third aspect or the fourth aspect, the chip system according to the fifth aspect, the computer storage medium according to the sixth aspect, and the computer program product according to the seventh aspect, refer to beneficial effects in the first aspect or the second aspect and any possible design manner of the first aspect or the second aspect. Details are not described herein again.

### BRIEF DESCRIPTION OF DRAWINGS

FIG. 1A is a schematic diagram of an example of a display interface of an electronic device according to an embodiment of this application;
FIG. 1B is a schematic diagram of an example of another display interface of an electronic device according to an embodiment of this application;
FIG. 1C is a schematic diagram of an example of still another display interface of an electronic device according to an embodiment of this application;
FIG. 1D is a schematic diagram of an example of yet another display interface of an electronic device according to an embodiment of this application;
FIG. 1E is a schematic diagram of an example of still yet another display interface of an electronic device according to an embodiment of this application;
FIG. 2 is a schematic diagram of a hardware structure of an electronic device according to an embodiment of this application;
FIG. 3 is a flowchart of a swipe control method for an electronic device according to an embodiment of this application;
FIG. 4A is a schematic diagram of an example of a display interface of an electronic device according to an embodiment of this application;
FIG. 4B is a schematic diagram of an example of another display interface of an electronic device according to an embodiment of this application;
FIG. 4C is a schematic diagram of an example of still another display interface of an electronic device according to an embodiment of this application;
FIG. 5A is a schematic diagram of an example of yet another display interface of an electronic device according to an embodiment of this application;
FIG. 5B is a schematic diagram of an example of still yet another display interface of an electronic device according to an embodiment of this application;
FIG. 5C is a schematic diagram of an example of a further display interface of an electronic device according to an embodiment of this application;
FIG. 6 is a flowchart of another swipe control method for an electronic device according to an embodiment of this application;
FIG. 7 is a flowchart of still another swipe control method for an electronic device according to an embodiment of this application;
FIG. 8 is a flowchart of yet another swipe control method for an electronic device according to an embodiment of this application;
FIG. 9 is a schematic diagram of a composition of a swipe control apparatus of an electronic device according to an embodiment of this application;
FIG. 10 is a flowchart of still yet another swipe control method for an electronic device according to an embodiment of this application;
FIG. 11 is a flowchart of a further swipe control method for an electronic device according to an embodiment of this application; and
FIG. 12 is a schematic diagram of a structure of a chip system according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In addition, the character "/" in this application generally indicates an "or" relationship between the associated objects. For example, A/B may be understood as "A or B".

The terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more such features. In the descriptions of embodiments, unless otherwise specified, "a plurality of" means two or more.

In addition, the terms "including", "having", or any other variant thereof in descriptions of this application are intended to cover a non-exclusive inclusion. For example, a process, a method, a system, a product, or a device that includes a series of steps or modules is not limited to the listed steps or modules, but optionally further includes other unlisted steps or modules, or optionally further includes another inherent steps or modules of the process, the method, the product, or the device.

In addition, in embodiments of this application, the words "example", "for example", or the like are used to represent giving an example, an illustration, or descriptions. Any embodiment or design scheme described as "example" or "for example" in this application should not be explained as being more preferred or having more advantages than another embodiment or design scheme. Exactly, use of the word "example" or "for example" or the like is intended to present a concept in a specific manner.

For ease of understanding the following embodiments clearly, brief descriptions of a related technology are given first.

Control: Generally, an element presented in a GUI (graphical user interface, graphical user interface) may be referred to as a control, and the control can provide a specific operation for a user or display specific content.

For example, the control may specifically include a text control, such as a TextView control and an EditText control, or may include a button control, such as a Button control and an ImageButton control, or may include a picture control, such as an Image View control.

In embodiments of this application, the control may be used to trigger an electronic device to switch between interfaces at a same level.

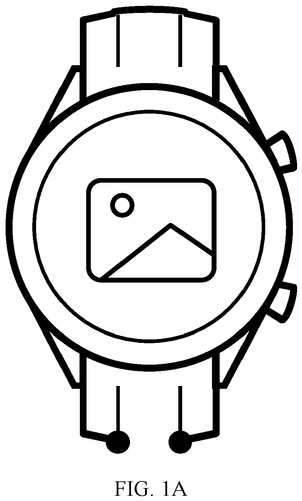

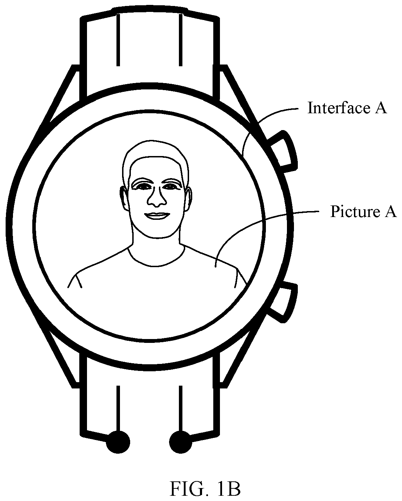

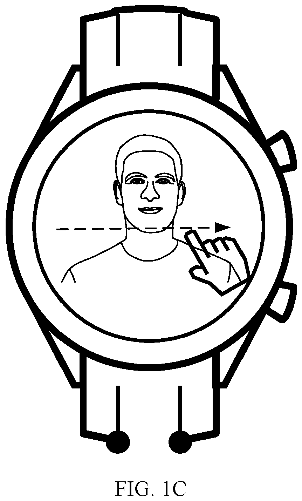

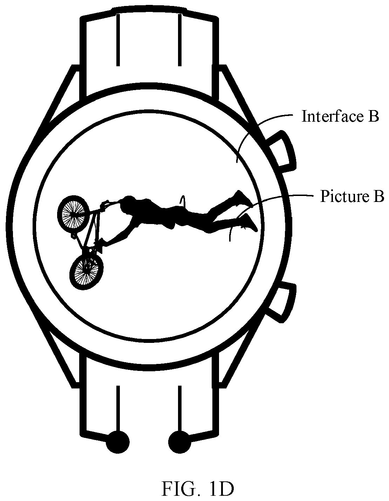

With development of science and technology, various third-party applications may be installed in a current lightweight electronic device (for example, a smart band or a smart watch). A swipe control is set on interfaces of some third-party applications, and the swipe control occupies the entire interface. In response to a swipe operation performed by the user on the swipe control, the electronic device may switch between a plurality of interfaces at a same level in the third-party application. For example, as shown in FIG. 1A, Gallery is installed in the smart watch. In response to a selection operation performed by the user on Gallery, the smart watch may display a picture, and the picture occupies an entire interface of a screen of the smart watch. As shown in FIG. 1B, an interface A displayed by the smart watch includes a picture A, and a swipe control is disposed in the interface A. As shown in FIG. 1C and FIG. 1D, in response to a swipe operation of the user, a swipe control of an interface A triggers the smart watch to switch between interfaces at a same level, and an actual interface B of the smart watch includes a picture B. The interface A and the interface B are interfaces at a same level, and both the picture A and the picture B are pictures in Gallery.

In addition, because a screen of the lightweight electronic device is small, there are not excessive button options on the lightweight electronic device for the user to operate the electronic device. Therefore, generally, the user needs to operate the lightweight electronic device by gestures. For example, generally, the smart watch may return to an upper-level interface in response to a rightward swipe gesture entered by the user. However, with reference to FIG. 1C and FIG. 1D, the smart watch responds to a rightward swipe gesture entered by the user, and the interface B displayed by the smart watch includes the picture B. Therefore, when a control exists in the interface displayed on the screen of the lightweight electronic device, and the control occupies the entire interface displayed on the lightweight electronic device, a gesture conflict may occur.

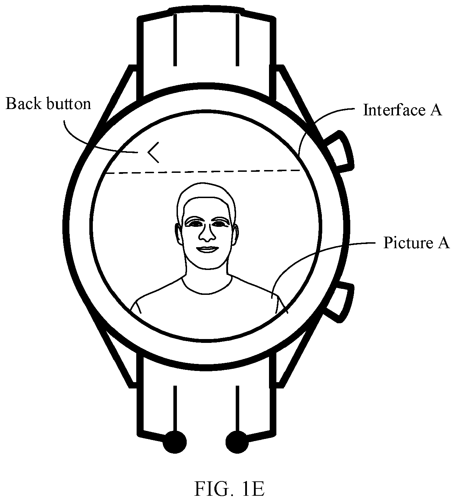

In a conventional technology, a button option can be added to the interface. As shown in FIG. 1E, the interface A displayed on the smart watch includes a back button and the picture A, and a swipe control is set on the picture A in the interface A. In response to a swipe operation performed by the user on the picture A, the swipe control triggers the smart watch to switch between interfaces at a same level. The smart watch displays an upper-level interface in response to an operation performed by the user on the back button. However, in the conventional technical solutions, the button option occupies some controls of the interface displayed on the screen. Therefore, content included in the interface is reduced, and effective utilization of the interface displayed on the screen is low.

Therefore, embodiments of this application provide a swipe control method for an electronic device. In the method, when displaying a first interface, the electronic device may display an interface at an upper level of the first interface or an interface at a lower level of the first interface in response to a swipe operation of the user. In this way, when a gesture conflict exists in the electronic device, the electronic device may display an interface at another level. In addition, in the technical solutions of this application, no button option needs to be added. This improves effective utilization of an interface displayed on a screen.

An application (for example, a first application and a second application) in this embodiment of this application may be an embedded application (that is, a system application of the electronic device) installed in the electronic device or a downloadable application. The embedded application is an application provided as a part of implementation of the electronic device (such as a smart watch). The downloadable application is an application that may provide an internet protocol multimedia subsystem (Internet Protocol Multimedia Subsystem, IMS) connection of the downloadable application. The downloadable application may be an application pre-installed in the terminal, or may be a third-party application that is downloaded by the user and that is installed in the terminal.

It should be noted that, in embodiments of this application, the electronic device is a touchable electronic device. For example, the electronic device in this embodiment of this application may be a tablet computer, a mobile phone, a desktop computer, a laptop, a handheld computer, a notebook computer, an ultra-mobile personal computer (ultra-mobile personal computer, UMPC), or a netbook, and a device such as a smart watch, a personal digital assistant (personal digital assistant, PDA), an augmented reality (augmented reality, AR)/virtual reality (virtual reality, VR) device, and a smart band. A specific form of the electronic device is not specially limited in embodiments of this application. Generally, because a screen of a lightweight electronic device such as a smart watch or a smart band is small, there are not excessive button options on the lightweight electronic device for the user to operate the electronic device. Therefore, compared with another electronic device, when operating the lightweight electronic device, the user more needs to operate the electronic device by gestures.

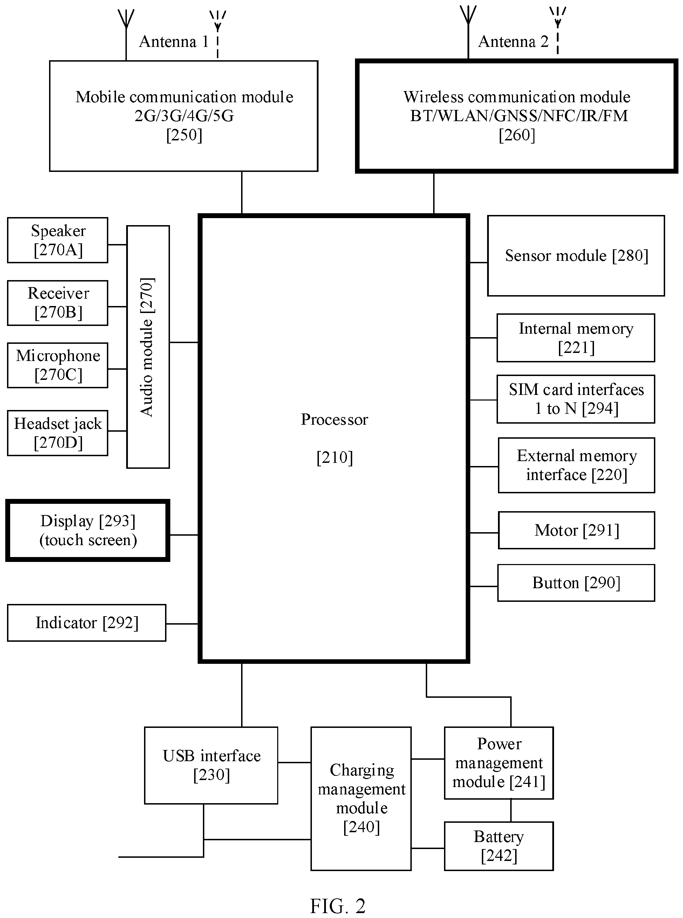

The swipe control method for an electronic device provided in this application may be performed by a swipe control apparatus of the electronic device, and the execution apparatus may be the electronic device shown in FIG. 2. In addition, the execution apparatus may alternatively be a central processing unit (Central Processing Unit, CPU) of the electronic device, or a module for swipe control of the electronic device in the electronic device. In this embodiment of this application, an example in which the electronic device performs the swipe control method for an electronic device is used to describe the swipe control method for an electronic device provided in this embodiment of this application.

Refer to FIG. 2. This application describes the electronic device provided in this application by using an example in which the electronic device is a smart watch 200 shown in FIG. 2. The smart watch 200 shown in FIG. 2 is merely an example of the electronic device, and the smart watch 200 may have more or fewer components than those shown in the figure, may combine two or more components, or may have different component configurations. The components shown in FIG. 2 may be implemented in hardware including one or more signal processors and/or application-specific integrated circuits, software, or a combination of hardware and software.

As shown in FIG. 2, the smart watch 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a display 293, a subscriber identification module (subscriber identification module, SIM) card interface 294, and the like.

The sensor module 280 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

It may be understood that the structure shown in this embodiment does not constitute a specific limitation on the smart watch 200. In some other embodiments, the smart watch 200 may include more or fewer components than those shown in the figure, or combine some components, or split some components, or have different component arrangements. The components shown in the figure may be implemented by using hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the smart watch 200. The controller may generate an operation control signal based on instruction operation code and a time sequence signal, to complete control of instruction fetching and instruction execution.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated access, reduces waiting time of the processor 210, and improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that the interface connection relationship between the modules shown in this embodiment is merely an example for description, and does not constitute a limitation on the structure of the smart watch 200. In some other embodiments, the smart watch 200 may alternatively use an interface connection manner different from that in the foregoing embodiment, or a combination of a plurality of interface connection manners.

The charging management module 240 is configured to receive a charging input from a charger. The charger may be a wireless charger or a wired charger. When charging the battery 242, the charging management module 240 may further supply power to the electronic device by using the power management module 241.

The power management module 241 is configured to connect to the battery 242, the charging management module 240, and the processor 210. The power management module 241 receives an input of the battery 242 and/or the charging management module 240, and supplies power to the processor 210, the internal memory 221, an external memory, the display 293, the wireless communication module 260, and the like. In some embodiments, the power management module 241 and the charging management module 240 may be alternatively disposed in a same component.

A wireless communication function of the smart watch 200 may be implemented by using the antenna 1, the antenna 2, the mobile communication module 250, the wireless communication module 260, the modem processor, the baseband processor, and the like. In some embodiments, the antenna 1 of the smart watch 200 is coupled to the mobile communication module 250, and the antenna 2 is coupled to the wireless communication module 260, so that the smart watch 200 can communicate with a network and another device by using a wireless communication technology. For example, in this embodiment of this application, the smart watch 200 may send the data in the first application to another device by using the wireless communication technology.

The antenna 1 and the antenna 2 are configured to transmit and receive an electromagnetic wave signal. Each antenna in the smart watch 200 may be configured to cover one or more communication frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communication module 250 may provide a solution that is applied to the smart watch 200 and that includes wireless communication such as 2G, 3G, 4G, and 5G. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit the electromagnetic wave to the modem processor for demodulation.

The mobile communication module 250 may further amplify a signal modulated by the modem processor, and convert the signal into an electromagnetic wave for radiation through the antenna 1. In some embodiments, at least some function modules in the mobile communication module 250 may be disposed in the processor 210. In some embodiments, at least some function modules in the mobile communication module 250 may be disposed in a same component as at least some modules in the processor 210.

The wireless communication module 260 may provide a wireless communication solution that is applied to the smart watch 200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. For example, in this embodiment of this application, the smart watch 200 may access the Wi-Fi network by using the wireless communication module 260.

The wireless communication module 260 may be one or more components integrating at least one communication processor module. The wireless communication module 260 receives the electromagnetic wave through the antenna 2, performs frequency modulation and filtering processing on the electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

The smart watch 200 implements a display function by using the GPU, the display 293, the application processor, or the like. The GPU is a microprocessor for image processing, and is connected to the display 293 and the application processor. The GPU is configured to perform mathematical and geometric calculation, and render an image. The processor 210 may include one or more GPUs that execute program instructions to generate or change display information.

The display 293 is configured to display an image, a video, or the like. The display 293 includes a display panel. For example, in this embodiment of this application, the display 293 may be configured to display an application interface of the first application, for example, a device sharing interface, a device search interface, and a two-dimensional code scanning interface.

The external memory interface 220 may be configured to connect to an external memory card, for example, a micro SD card, to expand a storage capability of the smart watch 200. The external memory card communicates with the processor 210 through the external memory interface 220, to implement a data storage function. For example, files such as music and a video are stored in the external memory card.

The internal memory 221 may be configured to store computer-executable program code. The executable program code includes instructions. The processor 210 performs various functional applications and data processing of the smart watch 200 by running the instructions stored in the internal memory 221. For example, in this embodiment of this application, the processor 210 may perform the instructions stored in the internal memory 221, and the internal memory 221 may include a program storage area and a data storage area.

The program storage area may store an operating system, an application required by at least one function (for example, a sound playing function or an image playing function), and the like. The data storage area may store data (such as audio data and a phone book) created in a process of using the smart watch 200. In addition, the internal memory 221 may include a high-speed random access memory, or may include a nonvolatile memory, for example, at least one magnetic disk storage device, a flash memory, or a universal flash storage (universal flash storage, UFS).

The smart watch 200 may implement an audio function, for example, music playing and recording, by using the audio module 270, the speaker 270A, the receiver 270B, the microphone 270C, the headset jack 270D, the application processor, and the like.

The button 290 includes a power button, a volume button, or the like. The button 290 may be a mechanical button, or a touch button. The motor 291 may generate a vibration prompt. The motor 291 may be configured to provide an incoming call vibration prompt and a touch vibration feedback. The indicator 292 may be an indicator light, and may be configured to indicate a charging status and a power change, or may be configured to indicate a message, a missed call, a notification, or the like. The SIM card interface 294 is configured to connect to a SIM card. The SIM card may be inserted into the SIM card interface 294 or removed from the SIM card interface 294 to implement contact and separation from the smart watch 200. The smart watch 200 may support one or N SIM card interfaces, where N is a positive integer greater than 1. The SIM card interface 294 may support a nano-SIM card, a micro-SIM card, a SIM card, and the like.

Although not shown in FIG. 2, the smart watch 200 may alternatively be a flashlight, a micro projection apparatus, a near field communication (Near Field Communication, NFC) apparatus, and the like. Details are not described herein again.

All methods in the following embodiments may be implemented in the electronic device having the foregoing hardware structure. In the following embodiments, the method in this embodiment of this application is described by using an example in which the electronic device is the smart watch 200.

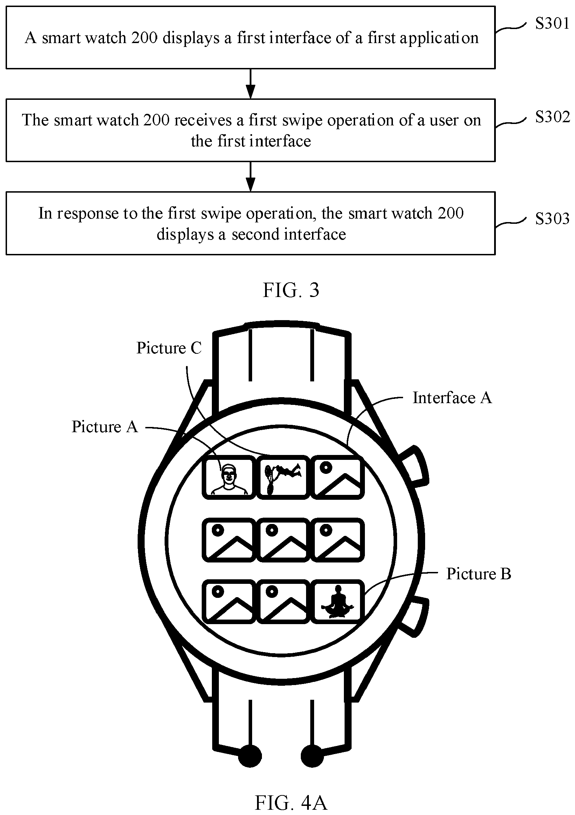

Embodiments of this application provide a swipe control method for an electronic device. As shown in FIG. 3, the swipe control method for an electronic device may include S301 to S303.

S301: A smart watch 200 displays a first interface of a first application.

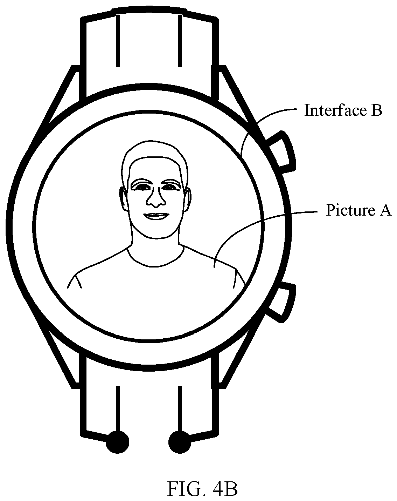

The first interface is the 1^{st} interface or the last interface of interfaces at a same level of the first application. For example, Gallery in the smart watch 200 stores nine pictures. As shown in FIG. 4A, an interface A displayed on the smart watch 200 includes thumbnails of nine pictures, such as a picture A, a picture B, and a picture C. Nine interfaces corresponding to enlarged images of the nine pictures are interfaces at a same level. For example, as shown in FIG. 4B, an interface B displayed on the smart watch 200 includes an enlarged image of the picture A. The interface including the enlarged image of the picture A is the 1^{st} interface of the interfaces that are at a same level and that are displayed when the smart watch 200 separately displays the enlarged images of the nine pictures, and an interface including the enlarged image of the picture B is the last interface of the interfaces that are at a same level and that are displayed when the smart watch 200 separately displays the enlarged images of the nine pictures.

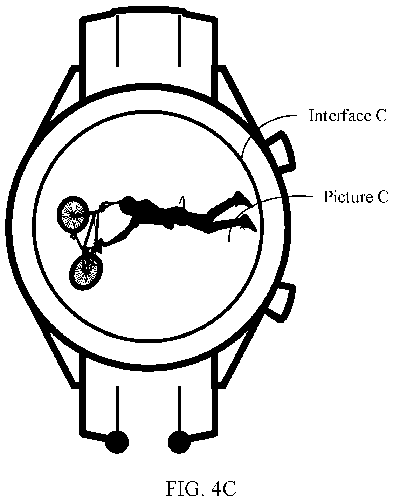

It should be noted that the first interface further includes a first control, and the first control is used to trigger, in response to a swipe operation, the smart watch 200 to switch between interfaces at a same level. For example, with reference to FIG. 4A and FIG. 4B, as shown in FIG. 4C, in response to a leftward swipe operation performed by the user on the interface B, the smart watch 200 displays an interface C that includes an enlarged image of the picture C.

In a possible design, the first control may fill an entire interface. In other words, with reference to FIG. 4A, FIG. 4B, and FIG. 4C, when the user performs a swipe operation on any area in the interface B, the first control may receive an instruction that instructs the smart watch 200 to switch between interfaces at a same level. The interface B that includes the picture A and that is displayed on the smart watch 200 is switched to the interface C that includes the picture C.

In another possible design, the first control may be disposed in a part of the interface. In other words, with reference to FIG. 4A, FIG. 4B, and FIG. 4C, when the user performs the swipe operation on an area in which the first control is disposed in the interface B, the first control may receive an instruction that instructs the smart watch 200 to switch between interfaces at a same level. The interface B that includes the picture A and that is displayed on the smart watch 200 is switched to the interface C that includes the picture C.

Optionally, the first control is invisible to the user on the display interface of the smart watch 200, that is, the user cannot view the first control. For example, the first control is invisible to the user at a bottom layer of a picture (the picture C shown in FIG. 4C) displayed on the smart watch 200. Therefore, the user can conveniently switch interfaces at a same level on the smart watch 200. Usually, when the first control is not displayed in the interface, the first control fills the entire interface. In this way, a case in which the user operates the smart watch 200 for a plurality of times because the user does not know the area set by the first control can be avoided, thereby improving user experience.

S302: The smart watch 200 receives a first swipe operation of the user on the first interface.

The first swipe operation includes two swipe operations between which an interval is less than preset duration.

It may be understood that the interval between the two swipe operations is limited to be less than the preset duration, so that recognition of the first swipe operation can be improved, and accuracy of recognizing the first swipe operation by the electronic device is improved. For details about how the smart watch 200 receives the first swipe operation of the user on the first interface, refer to S601 to S603. Details are not described herein again.

It should be noted that the first interface is the 1^{st} interface or the last interface of the interfaces at a same level of the first application. Therefore, when the electronic device receives a swipe operation of the user, the smart watch 200 cannot switch between interfaces at a same level.

For example, it is assumed that the user performs a left-to-right swipe operation to trigger the smart watch 200 to switch the current interface to a next interface at a same level, and the user performs a right-to-left swipe operation to trigger the smart watch 200 to switch the current interface to a previous interface at a same level.

Usually, when the first interface is the 1^{st} interface of the interfaces at a same level, in response to a left-to-right swipe operation entered by the user on the first interface, the smartphone 200 cannot switch the first interface to a previous interface at a same level, and the smartphone 200 still displays the first interface. When the first interface is the last interface of the interfaces at a same level, in response to a right-to-left swipe operation entered by the user on the first interface, the smartphone 200 cannot switch the first interface to a next interface at a same level, and the smartphone 200 still displays the first interface.

However, in this embodiment of this application, the smart watch 200 may receive the first swipe operation of the user on the first interface, and in response to the first swipe operation, the smart watch 200 may perform interface switching.

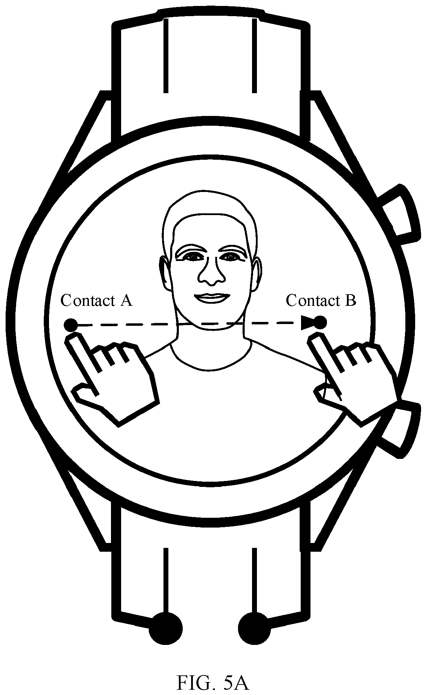

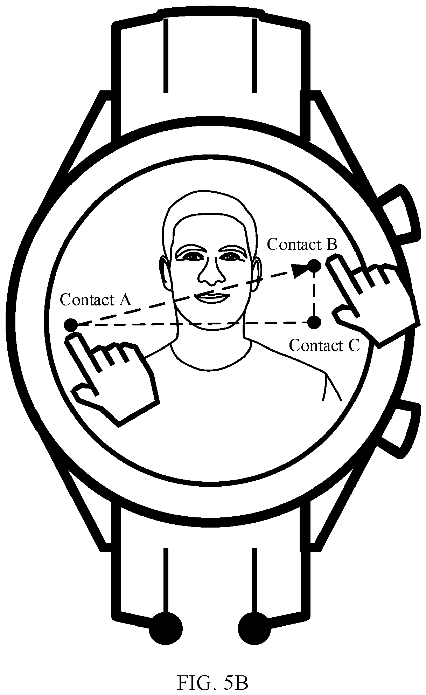

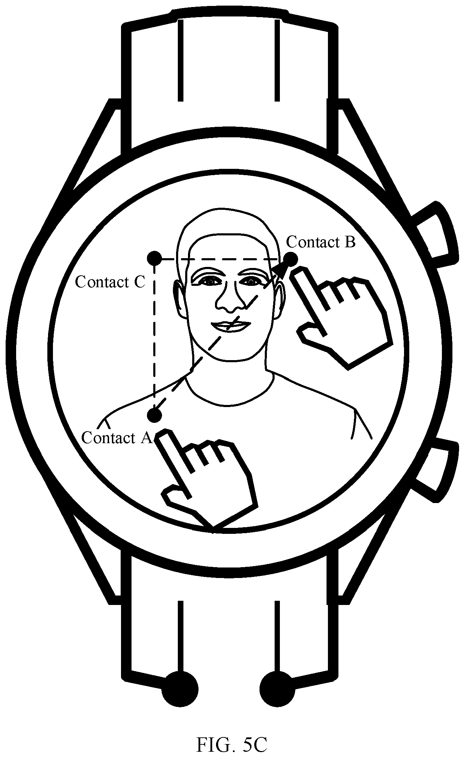

Optionally, a swipe distance of each of the two swipe operations is greater than a preset distance threshold. The swipe distance is a straight-line distance between a start contact at which the user starts a swipe operation on the first interface and an end contact at which the user ends the swipe operation on the first interface. For example, as shown in FIG. 5A, the swipe distance is a straight-line distance between a contact A and a contact B. Alternatively, the swipe distance is a straight-line distance that is between a start contact at which the user starts a swipe operation on the first interface and an end contact at which the user ends the swipe operation on the first interface and that is along an x-axis direction. For example, as shown in FIG. 5B, the swipe distance is a straight-line distance between a contact A and a contact C. Alternatively, the swipe distance is a straight-line distance that is between a start contact at which the user starts a swipe operation on the first interface and an end contact at which the user ends the swipe operation on the first interface and that is along a y-axis direction. For example, as shown in FIG. 5C, the swipe distance is a straight-line distance between a contact A and a contact C. This is not limited in embodiments of this application.

It should be noted that the preset distance threshold may be set by a developer. This is not limited in embodiments of this application. When the swipe distance of the swipe operation is less than the preset distance threshold, the smart watch 200 does not respond to the swipe operation of the user. In this way, the swipe distance of the swipe operation is limited, so that a case in which the electronic device responds to an accidental touch operation of the user can be avoided, thereby improving user experience. In addition, only when the swipe distance of the swipe operation is greater than the preset distance threshold, the swipe operation may be the swipe operation included in the first swipe operation. In this way, recognition of the first swipe operation can be improved, and accuracy of recognizing the first swipe operation by the electronic device is improved.

S303: The smart watch 200 displays a second interface in response to the first swipe operation.

The second interface is an interface at an upper level of the first interface or an interface at a lower level of the first interface. For example, with reference to FIG. 4A and FIG. 4B, the interface A is an interface at an upper level of the interface B, and the interface B is an interface at a lower level of the interface A.

In a possible design, the first swipe operation is a swipe operation in a first direction, and the second interface is the interface at the upper level of the first interface. The first swipe operation includes a swipe operation from left to right, a swipe operation from top to bottom, a swipe operation from top left to bottom right, a swipe operation from bottom left to top right, or a swipe operation from top right to bottom left. This is not limited in embodiments of this application. Two side frames (such as a left frame and a lower frame) that are perpendicular to each other on the electronic device are respectively used as an x-axis and a y-axis, and the swipe operation from left to right refers to a swipe operation in a positive direction of the x-axis. The swipe operation from top to bottom refers to a swipe operation in the negative direction of the y-axis.

It should be noted that, when the first swipe operation is the swipe operation from top left to bottom right, the smart watch 200 determines the swipe direction based on a degree of an included angle formed between the x-axis or the y-axis and a track line segment between the start contact and the end contact at which the user performs the swipe operation. The degree of the included angle is greater than or equal to 0 degrees and less than or equal to 90 degrees. If the degree of the included angle formed between the track line segment and the x-axis is less than the degree of the included angle formed between the track line segment and the y-axis, the swipe direction recognized by the smart watch 200 is the right direction. If the degree of the included angle formed between the track line segment and the x-axis is greater than the degree of the included angle formed between the track line segment and the y-axis, the swipe direction recognized by the smart watch 200 is the down direction. When the first swipe operation is a swipe operation from bottom left to top right, the degree of the included angle formed between the track line segment formed by performing the swipe operation by the user and the x-axis is less than the degree of the included angle formed between the track line segment and the y-axis. The swipe direction recognized by the smart watch 200 is the right direction. When the first swipe operation is a swipe operation from top right to bottom left, the degree of the included angle formed between the track line segment formed by performing the swipe operation by the user and the x-axis is greater than the degree of the included angle formed between the track line segment and the y-axis. The swipe direction recognized by the smart watch 200 is the down direction.

For example, with reference to FIG. 4A and FIG. 4B, in response to the first swipe operation performed by the user on the interface B that includes two rightward swipe operations, the interface B displayed by the smart watch 200 is switched to the interface A.

In another possible design, the first swipe operation is a swipe operation in a second direction, and the second interface is the interface at the lower level of the first interface. The first swipe operation includes a swipe operation from right to left, a swipe operation from bottom to top, a swipe operation from bottom right to top left, a swipe operation from top right to bottom left, or a swipe operation from bottom left to top right. This is not limited in embodiments of this application. Two side frames (such as a left frame and a lower frame) that are perpendicular to each other on the electronic device are respectively used as the x-axis and the y-axis, and a swipe operation from right to left refers to a swipe operation in a negative direction of the x-axis. The swipe operation from bottom to top refers to a swipe operation in a positive direction of the y-axis.

It should be noted that, when the first swipe operation is a swipe operation from bottom right to top left, if the degree of the included angle formed between the track line segment and the x-axis is less than the degree of the included angle formed between the track line segment and the y-axis, the swipe direction recognized by the smart watch 200 is the left direction. If the degree of the included angle formed between the track line segment and the x-axis is greater than the degree of the included angle formed between the track line segment and the y-axis, the swipe direction recognized by the smart watch 200 is the upward direction. When the first swipe operation is a swipe operation from bottom left to top right, the degree of the included angle formed between the track line segment formed by performing the swipe operation by the user and the x-axis is greater than the degree of the included angle formed between the track line segment and the y-axis. The swipe direction recognized by the smart watch 200 is the upward direction. When the first swipe operation is a swipe operation from top right to bottom left, the degree of the included angle formed between the track line segment formed by the user by performing the swipe operation and the x-axis is less than the degree of the included angle formed between the track line segment and the y-axis. The swipe direction that can be recognized by the smart watch 200 is the left direction.

In embodiments of this application, the first direction is opposite to the second direction.

Based on the foregoing technical solutions, when the electronic device displays the 1^{st} interface or the last interface (namely, the first interface) of the interfaces at the same level of the first application, the electronic device may respond to two swipe operations of the user on the first interface between which an interval time is less than the preset duration, and display an interface at an upper level of the first interface or an interface at a lower level of the first interface. In this way, although when the electronic device displays the 1^{st} interface or the last interface of the interfaces at the same level of the first application, the interface displayed by the electronic device cannot be switched between interfaces at the same level in response to a swipe operation of the user, according to the foregoing solutions, when the user performs two swipe operations on the electronic device between which the interval time is less than the preset duration, the electronic device does not switch between interfaces at a same level, but displays an interface at an upper level of the first interface or an interface at a lower level of the first interface.

Therefore, according to the technical solutions of this application, when a gesture conflict exists in the electronic device, the electronic device may still perform interface switching, for example, displaying an interface at another level. In addition, in the technical solutions of this application, the interval between the two swipe operations is limited to be less than the preset duration, so that recognition of the first swipe operation can be improved, and accuracy of recognizing the first swipe operation by the electronic device is improved.

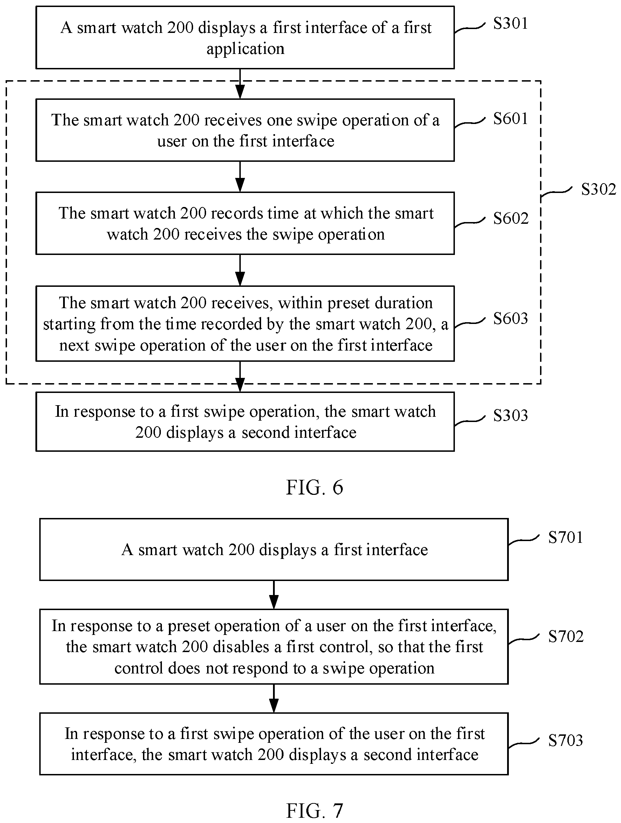

S302 is specifically described below. As shown in FIG. 6, S302 may include S601 to S603.

S601: The smart watch 200 receives one swipe operation performed by the user on the first interface.

S602: The smart watch 200 records time at which the smart watch 200 receives the swipe operation.

S603: The smart watch 200 receives, in the preset duration starting from the time recorded by the smart watch 200, a next swipe operation of the user on the first interface.

In a possible implementation, the smart watch 200 receives the next swipe operation performed by the user on the first interface, and records time at which the smart watch receives the next swipe operation. Then, the smart watch 200 detects an interval that is recorded by the smart watch 200 and that is of receiving two swipe operations, and determines whether the interval is less than the preset duration. If the interval is less than the preset duration, the smart watch 200 determines that the two swipe operations are the first swipe operations. If the interval is greater than the preset duration, the smart watch 200 determines that the two swipe operations are two independent swipe operations.

Based on the foregoing technical solutions, the electronic device records time at which one swipe operation is received, and may determine, based on the time, that the next swipe operation received by the electronic device within the preset duration starting from the time is the swipe operation in the first swipe operation. In this way, recognition of the first swipe operation can be improved, and accuracy of recognizing the first swipe operation by the electronic device is improved.

Embodiments of this application provide a swipe control method for an electronic device. As shown in FIG. 7, the swipe control method for an electronic device may include S701 to S703.

S701: A smart watch 200 displays a first interface.

A first control is disposed in the first interface, and the first control is used to trigger, in response to a swipe operation, the smart watch 200 to switch between interfaces at a same level. For specific descriptions of the first control, refer to the descriptions of the first control in S301. Details are not described herein again.

S702: The smart watch 200 disables the first control in response to a preset operation of a user on the first interface, so that the first control does not respond to the swipe operation.

In a possible implementation, in response to the preset operation of the user on the first interface, the smart watch 200 sets a value of a swipe flag of the first control from a first preset value to a second preset value. The swipe flag is used to represent whether the first control responds to the swipe operation. If the value of the swipe flag is the first preset value, the first control responds to the swipe operation. If the value of the swipe flag is the second preset value, the first control does not respond to the swipe operation. For example, the first preset value may be "true", and the second preset value may be "false". Expression forms of the first preset value and the second preset value are not limited in this embodiment of this application.

It should be noted that in this embodiment of this application, enabling the first control by the smart watch 200 may also be referred to as activating the first control by the smart watch 200. Disabling the first control by the smart watch 200 may also be referred to as deactivating the first control by the smart watch 200. The activated first control may respond to the swipe operation, and the deactivated first control cannot respond to the swipe operation.

The preset operation is an operation that does not trigger a control in the first interface. It may be understood that the preset operation is an operation that does not trigger a control in the first interface, so that a gesture conflict can be avoided.

In a possible design, the preset operation includes a touch and hold operation. Pressing duration of the touch and hold operation is greater than second preset duration. To be specific, when the pressing duration of the touch and hold operation is greater than the second preset duration, the smart watch 200 may disable the first control, so that the first control does not respond to the swipe operation. It may be understood that, by limiting the pressing duration, a case in which the electronic device responds to an accidental touch operation of the user is avoided, thereby improving user experience.

S703: The smart watch 200 displays a second interface in response to a first swipe operation of the user on the first interface.

The second interface is an interface at an upper level of the first interface or an interface at a lower level of the first interface. A swipe distance of the first swipe operation is greater than a preset distance threshold.

In a possible design, the first swipe operation is a swipe operation in a first direction, and the second interface is the interface at the upper level of the first interface. For example, with reference to FIG. 4A and FIG. 4B, in response to a rightward swipe operation performed by the user on the interface B, an interface B displayed by the smart watch 200 is switched to an interface A.

In another possible design, the first swipe operation is a swipe operation in a second direction, and the second interface is the interface at the lower level of the first interface.

It should be noted that the first direction is opposite to the second direction. For specific descriptions of the swipe direction of the first swipe operation, refer to the descriptions in S303. Details are not described herein again.

Based on the foregoing technical solutions, in response to a preset operation of the user on the first interface, the electronic device may disable the first control. In other words, after the electronic device receives the swipe operation of the user, the interface displayed by the electronic device cannot be switched between interfaces at a same level. Further, in response to the first swipe operation of the user on the first interface, the electronic device may display an interface at an upper level of the first interface or an interface at a lower level of the first interface. In this way, although the interface displayed by the electronic device cannot be switched between interfaces at a same level in response to the first swipe operation of the user on the electronic device, according to the foregoing solutions, the electronic device may display an interface at an upper level of the first interface or an interface at a lower level of the first interface. Therefore, according to the technical solutions of this application, when a gesture conflict exists in the electronic device, the electronic device may still perform interface switching, for example, displaying an interface at another level.

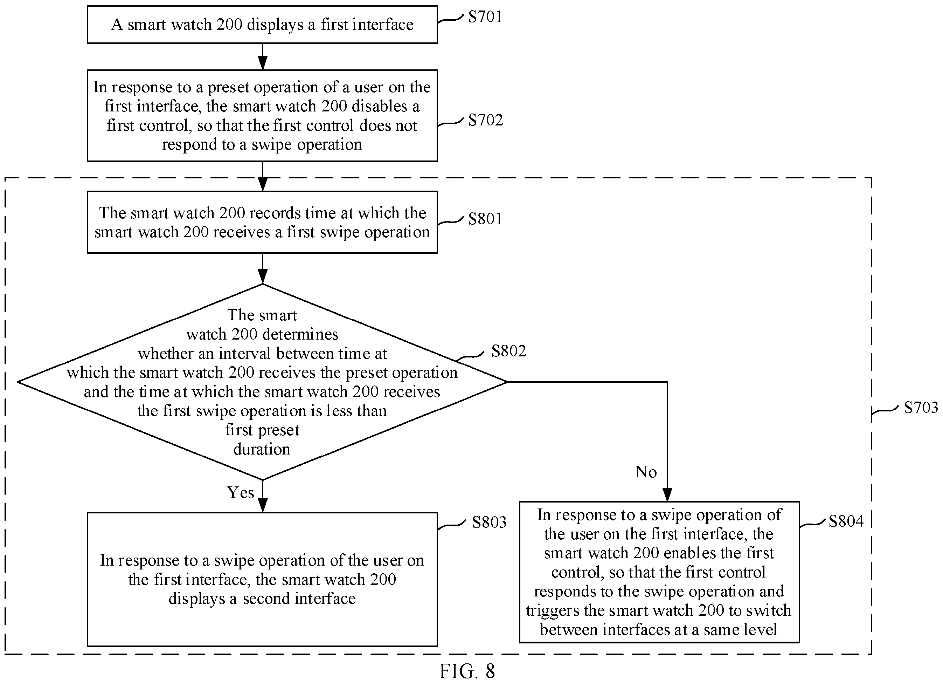

S703 is specifically described below. As shown in FIG. 8, S703 may include S801 to S804.

S801: The smart watch 200 records time at which the smart watch 200 receives the first swipe operation.

Optionally, before the smart watch 200 records the time at which the smart watch 200 receives the first swipe operation, when the smart watch 200 receives the preset operation, the smart watch 200 records time at which the smart watch 200 receives the preset operation.

S802: The smart watch 200 determines whether an interval between the time at which the smart watch 200 receives the preset operation and the time at which the smart watch 200 receives the first swipe operation is less than first preset duration.

In a possible design, if the smart watch 200 determines that the interval between the time at which the smart watch 200 receives the preset operation and the time at which the smart watch 200 receives the first swipe operation is less than the first preset duration, the smart watch 200 performs S803. If the smart watch 200 determines that the interval between the time at which the smart watch 200 receives the preset operation and the time at which the smart watch 200 receives the first swipe operation is greater than the first preset duration, the smart watch 200 performs S804.

For example, if the interval between the time at which the smart watch 200 receives the preset operation and the time at which the smart watch 200 receives the first swipe operation is 200 milliseconds (millisecond, ms), the first preset duration is 200 ms, that is, the interval between the time at which the smart watch 200 receives the preset operation and the time at which the smart watch 200 receives the first swipe operation falls within the first preset duration, the smart watch 200 performs S803.

S803: The smart watch 200 displays a second interface in response to a swipe operation of the user on the first interface.

S804: In response to a swipe operation of the user on the first interface, the smart watch 200 enables the first control, so that the first control responds to the swipe operation and triggers the smart watch 200 to switch between interfaces at a same level.

In a possible implementation, after the smart watch 200 disables the first control, if the smart watch 200 determines that the interval between the time at which the smart watch 200 receives the preset operation and the time at which the smart watch 200 receives the first swipe operation is greater than the first preset duration, in response to the preset operation of the user on the first interface, the smart watch 200 sets the value of the swipe flag of the first control from the second preset value to the first preset value, so that the first control responds to the swipe operation and triggers the smart watch 200 to switch between interfaces at a same level. For example, with reference to FIG. 4A and FIG. 4B, the smart watch 200 triggers the first control in response to the leftward swipe operation of the user on the interface B, so that the first control triggers the smart watch 200 to switch the displayed interface from the interface B to an interface C in response to the swipe operation.

Based on the foregoing technical solutions, by limiting the swipe operation, the smart watch 200 can improve recognition of the first swipe operation. This further improves accuracy of recognizing the first swipe operation by the electronic device. In addition, after the first preset duration, in response to a swipe operation of the user on the first interface, the smart watch 200 may enable the first control, so that the first control triggers, in response to the swipe operation, the smart watch 200 to switch between interfaces at a same level, thereby improving user experience.

The foregoing mainly describes the solutions provided in embodiments of this application from a perspective of the electronic device. It may be understood that, to implement the foregoing functions, the electronic device includes a corresponding hardware structure and/or software module for performing each of the functions. A person skilled in the art should easily be aware that, with reference to the examples described in embodiments disclosed in this application, steps of a swipe control method for an electronic device can be implemented by hardware or a combination of hardware and computer software in this application. Whether a function is performed by hardware or hardware driven by electronic device software depends on a particular application and a design constraint of the technical solutions. A person skilled in the art may use different methods to implement the described functions for each particular application, but it should not be considered that the implementation goes beyond the scope of this application.

In embodiments of this application, function module division or function unit division may be performed on the swipe control apparatus of the electronic device based on the foregoing method example. For example, each function module or function unit may be obtained through division based on each corresponding function, or two or more functions may be integrated into one processing module. The integrated module may be implemented in a form of hardware, or may be implemented in a form of a software functional module or functional unit. In embodiments of this application, module or unit division is an example, and is merely a logical function division. In actual implementation, another division manner may be used.

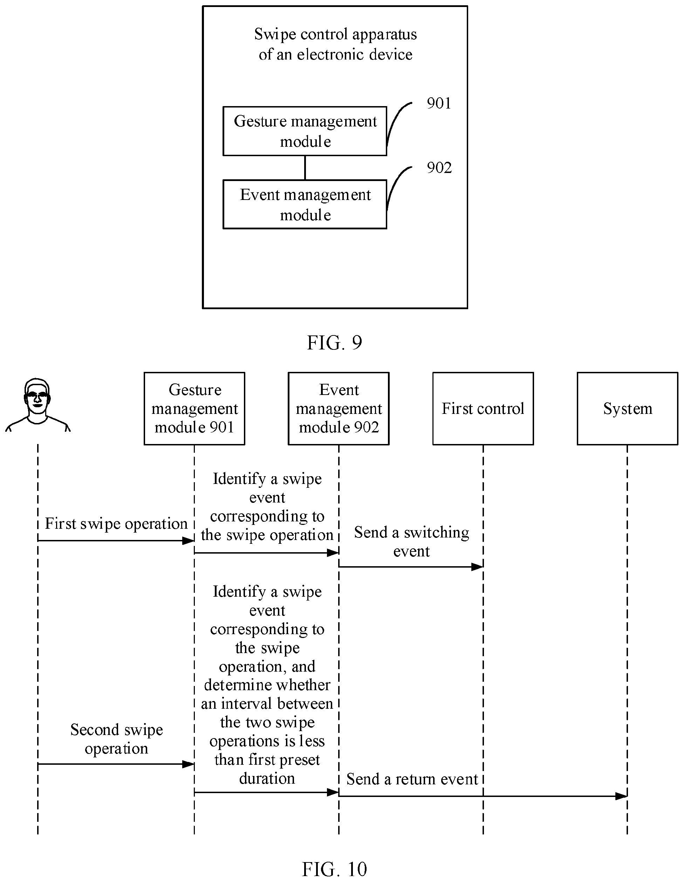

FIG. 9 is a schematic diagram of a swipe control apparatus of an electronic device according to an embodiment of this application. The swipe control apparatus of the electronic device may be a function module in the foregoing electronic device (such as the smart watch 200) configured to implement the method in embodiments of this application. As shown in FIG. 9, the swipe control apparatus of the electronic device may include a gesture management module 901 and an event management module 902.

The gesture management module 901 is configured to support the smart watch 200 in performing: receiving an operation performed by a user on the electronic device, and recognizing a gesture of the user. For example, the gesture management module 901 is configured to support the smart watch 200 in performing S302, S601, and S603 in the foregoing method embodiments, and/or another process of the technology described in this specification. For example, a function of the gesture management module 901 may be implemented by using a processor 210, a sensor 280, an internal memory 221, or the like of the smart watch 200.

The event management module 902 is configured to support the smart watch 200 in performing: recognizing an event corresponding to a gesture of the user. For example, the event management module 902 is configured to support the smart watch 200 in performing S301, S303, S602, S701, S702, S703, S801, S802, S803, and S804 in the foregoing method embodiments, and/or other processes of the technology described herein. For example, a function of the event management module 902 may be implemented by using the processor 210, the internal memory 221, a display 293, and the like of the smart watch 200.

For example, with reference to FIG. 3 and FIG. 6, as shown in FIG. 10, in response to a first swipe operation performed by the user on a first interface, the gesture management module 901 recognizes a swipe gesture corresponding to the first swipe operation, and sends the swipe gesture to the event management module 902. The event management module 902 determines, based on the swipe gesture, a swipe event corresponding to the swipe gesture, and sends the swipe event to a first control. If the first interface is not switched, and the gesture management module 901 receives a second swipe operation, the gesture management module 901 recognizes a swipe gesture corresponding to the second swipe operation, and sends the swipe gesture to the event management module 902. The event management module 902 detects an interval between time at which the gesture management module 901 receives the first swipe operation and time at which the gesture management module 901 receives the second swipe operation, and determines whether the interval between the two swipe operations is less than preset duration. If the interval between the two swipe operations is less than the preset duration, the event management module 902 sends a return event to the system.

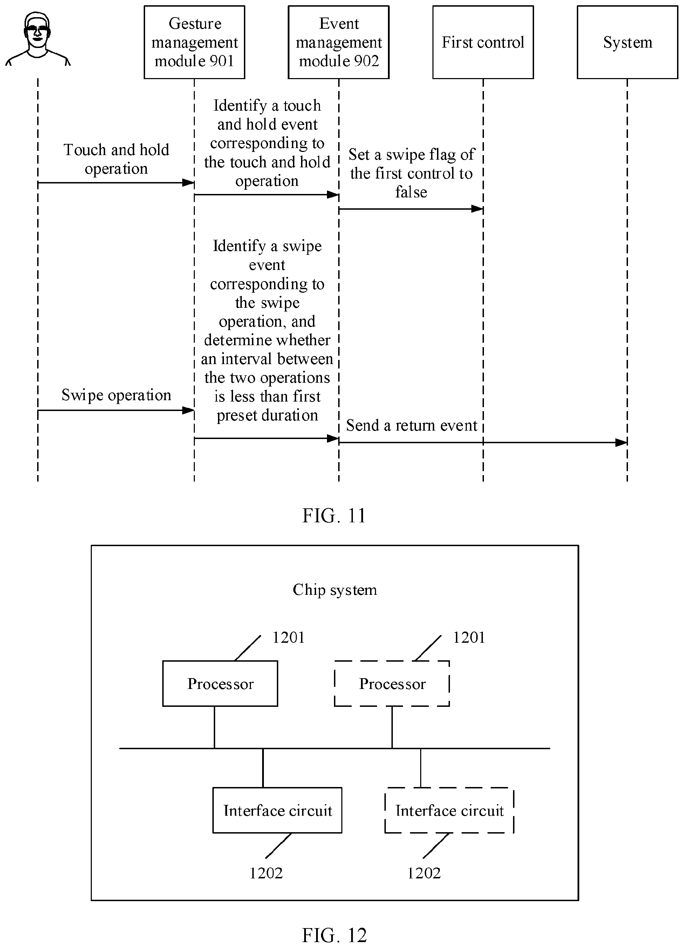

For another example, with reference to FIG. 7 and FIG. 8, as shown in FIG. 11, in response to a touch and hold operation performed by the user on the first interface, the gesture management module 901 recognizes a touch and hold gesture corresponding to the touch and hold operation, and sends the touch and hold gesture to the event management module 902. The event management module 902 determines, based on the touch and hold gesture, a touch and hold event corresponding to the touch and hold gesture, and sends the touch and hold event to the first control. The first control sets a swipe flag of the first control to false in response to the touch and hold event. Then, the gesture management module 901 receives the swipe operation, and the gesture management module 901 recognizes a swipe gesture corresponding to the swipe operation, and sends the swipe gesture to the event management module 902. The event management module 902 detects an interval between time at which the gesture management module 901 receives the touch and hold operation and time at which the gesture management module 901 receives the swipe operation, and determines whether the interval between the two operations is less than first preset duration. If the interval between the two operations is less than the preset duration, the event management module 902 sends a return event to the system.

Some other embodiments of this application provide an electronic device (for example, the smart watch 200 shown in FIG. 2). A first application is installed in the electronic device. The electronic device may include a display, a memory, and one or more processors. The display and the memory are coupled to the processor. The electronic device may further include a camera. Alternatively, the electronic device may be connected to an external camera. The memory is configured to store computer program code. The computer program code includes computer instructions. When the processor executes the computer instructions, the electronic device may perform the functions or steps performed by the mobile phone in the foregoing method embodiments. For a structure of the electronic device, refer to the structure of the smart watch 200 shown in FIG. 2.

Embodiments of this application further provide a chip system. As shown in FIG. 12, the chip system includes at least one processor 1201 and at least one interface circuit 1202. The processor 1201 and the interface circuit 1202 may be interconnected through a line. For example, the interface circuit 1202 may be configured to receive a signal from another apparatus (for example, a memory in the electronic device). For another example, the interface circuit 1202 may be configured to send a signal to another apparatus (for example, the processor 1201). For example, the interface circuit 1202 may read instructions stored in the memory, and send the instructions to the processor 1201. When the instructions are performed by the processor 1201, the electronic device (for example, the smart watch 200 shown in FIG. 2) is enabled to perform the steps in the foregoing embodiments. Certainly, the chip system may further include another discrete device. This is not specifically limited in this embodiment of this application.

Embodiments of this application further provide a computer storage medium. The computer storage medium includes computer instructions. When the computer instructions are run on the foregoing electronic device (for example, the smart watch 200 shown in FIG. 2), the electronic device is enabled to perform the functions or steps performed by the mobile phone in the foregoing method embodiments.

Embodiments of this application further provide a computer program product. When the computer program product runs on a computer, the computer is enabled to perform functions or steps performed by the mobile phone in the foregoing method embodiments.

The foregoing descriptions about implementations allow a person skilled in the art to clearly understand that, for the purpose of convenient and brief description, division of the foregoing functional modules is used as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatuses and methods may be implemented in other manners. For example, the described apparatus embodiments are merely examples. For example, division of the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in a form of a software function unit and sold or used as an independent product, the integrated unit may be stored in a readable storage medium. Based on such an understanding, the technical solutions of embodiments of this application essentially, or the part contributing to the current technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of steps of methods in embodiments of this application. The foregoing storage medium includes any medium that can store program code, for example, a USB flash drive, a removable hard disk, a read only memory (read only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A swipe control method for an electronic device, applied to an electronic device comprising a display, wherein a first application is installed on the electronic device, and the method comprises:
displaying, by the electronic device, a first interface of the first application, wherein the first interface is the 1^{st} interface or the last interface of interfaces at a same level of the first application;
receiving, by the electronic device, a first swipe operation of a user on the first interface, wherein the first swipe operation comprises two swipe operations between which an interval is less than preset duration; and
displaying, by the electronic device, a second interface in response to the first swipe operation, wherein the second interface is an interface at an upper level of the first interface or an interface at a lower level of the first interface.

2. The method according to claim 1, wherein the receiving, by the electronic device, a first swipe operation of a user on the first interface comprises:
receiving, by the electronic device, one swipe operation of the user on the first interface;
recording, by the electronic device, time at which the electronic device receives the swipe operation; and
receiving, by the electronic device within the preset duration starting from the time recorded by the electronic device, a next swipe operation of the user on the first interface.

3. The method according to claim 1 or 2, wherein a swipe distance of each of the two swipe operations is greater than a preset distance threshold.

4. The method according to any one of claims 1 to 3, wherein the first swipe operation is a swipe operation in a first direction, and the second interface is the interface at the upper level of the first interface; or
the first swipe operation is a swipe operation in a second direction, and the second interface is the interface at the lower level of the first interface, wherein
the first direction is opposite to the second direction.

5. A swipe control method for an electronic device, wherein the method is applied to an electronic device comprising a display, and the method comprises:
displaying, by the electronic device, a first interface, wherein a first control is disposed in the first interface, and the first control is used to trigger, in response to a swipe operation, the electronic device to switch between interfaces at a same level;
disabling, by the electronic device, the first control in response to a preset operation of a user on the first interface, so that the first control does not respond to a swipe operation, wherein the preset operation comprises a touch and hold operation; and
displaying, by the electronic device, a second interface in response to a first swipe operation of the user on the first interface, wherein the second interface is an interface at an upper level of the first interface or an interface at a lower level of the first interface.

6. The method according to claim 5, wherein the displaying, by the electronic device, a second interface in response to a first swipe operation of the user on the first interface comprises:
if the electronic device receives a swipe operation within first preset duration starting from time at which the electronic device receives the preset operation, displaying, by the electronic device, the second interface in response to the swipe operation of the user on the first interface.

7. The method according to claim 5 or 6, wherein the method further comprises:
enabling, by the electronic device, the first control after the first preset duration starting from the time at which the electronic device receives the preset operation, so that the first control triggers, in response to a swipe operation, the electronic device to switch between interfaces at a same level.

8. The method according to any one of claims 5 to 7, wherein press duration of the touch and hold operation is greater than second preset duration.

9. The method according to any one of claims 5 to 8, wherein a swipe distance of the first swipe operation is greater than a preset distance threshold.

10. The method according to any one of claims 5 to 9, wherein the first swipe operation is a swipe operation in a first direction, and the second interface is the interface at the upper level of the first interface; or
the first swipe operation is a swipe operation in a second direction, and the second interface is the interface at the lower level of the first interface, wherein
the first direction is opposite to the second direction.

11. An electronic device, wherein a first application is installed on the electronic device, and the electronic device comprises a memory, a display, and one or more processors; and the memory and the display are coupled to the processor, the memory is configured to store computer program code, the computer program code comprises computer instructions, and when the computer instructions are executed by the one or more processors, the electronic device is enabled to perform the following operations:
displaying a first interface of the first application, wherein the first interface is the 1^{st} interface or the last interface of interfaces at a same level of the first application;
receiving a first swipe operation of a user on the first interface, wherein the first swipe operation comprises two swipe operations between which an interval is less than preset duration; and
displaying a second interface in response to the first swipe operation, wherein the second interface is an interface at an upper level of the first interface or an interface at a lower level of the first interface.

12. The electronic device according to claim 11, wherein when the computer instructions are executed by the one or more processors, the electronic device is enabled to further perform the following steps:
receiving one swipe operation of the user on the first interface;
recording time at which the electronic device receives the swipe operation; and
receiving a next swipe operation of the user on the first interface within the preset duration starting from the time recorded by the electronic device.

13. The electronic device according to claim 11 or 12, wherein a swipe distance of each of the two swipe operations is greater than a preset distance threshold.

14. The electronic device according to any one of claims 11 to 13, wherein the first swipe operation is a swipe operation in a first direction, and the second interface is the interface at the upper level of the first interface; or
the first swipe operation is a swipe operation in a second direction, and the second interface is the interface at the lower level of the first interface, wherein
the first direction is opposite to the second direction.

15. An electronic device, wherein the electronic device comprises a memory, a display, and one or more processors, the memory and the display are coupled to the processor, the memory is configured to store computer program code, the computer program code comprises computer instructions, and when the computer instructions are executed by the one or more processors, the electronic device is enabled to perform the following operations:
displaying a first interface, wherein a first control is disposed in the first interface, and the first control is used to trigger, in response to a swipe operation, the electronic device to switch between interfaces at a same level;
disabling the first control in response to a preset operation of a user on the first interface, so that the first control does not respond to a swipe operation, wherein the preset operation comprises a touch and hold operation; and
displaying a second interface in response to a first swipe operation of the user on the first interface, wherein the second interface is an interface at an upper level of the first interface or an interface at a lower level of the first interface.

16. The electronic device according to claim 15, wherein when the computer instructions are executed by the one or more processors, the electronic device is enabled to further perform the following step:
if a swipe operation is received within first preset duration starting from time at which the electronic device receives the preset operation, displaying the second interface in response to the swipe operation of the user on the first interface.

17. The electronic device according to claim 15 or 16, wherein when the computer instructions are executed by the one or more processors, the electronic device is enabled to further perform the following step:
enabling the first control after the first preset duration starting from the time at which the electronic device receives the preset operation, so that the first control triggers, in response to a swipe operation, the electronic device to switch between interfaces at a same level.

18. The electronic device according to any one of claims 15 to 17, wherein press duration of the touch and hold operation is greater than second preset duration.

19. The electronic device according to any one of claims 15 to 18, wherein a swipe distance of the first swipe operation is greater than a preset distance threshold.

20. The electronic device according to any one of claims 15 to 19, wherein the first swipe operation is a swipe operation in a first direction, and the second interface is the interface at the upper level of the first interface; or
the first swipe operation is a swipe operation in a second direction, and the second interface is the interface at the lower level of the first interface, wherein
the first direction is opposite to the second direction.

21. A chip system, wherein the chip system is used in an electronic device; the chip system comprises one or more interface circuits and one or more processors; the interface circuit and the processor are interconnected through a line; the interface circuit is configured to receive a signal from a memory of the electronic device, and send the signal to the processor, wherein the signal comprises computer instructions stored in the memory; and when the processor executes the computer instructions, the electronic device performs the method according to any one of claims 1 to 10.

22. A computer storage medium, comprising computer instructions, wherein when the computer instructions are run on an electronic device, the electronic device is enabled to perform the method according to any one of claims 1 to 10.

23. A computer program product, wherein when the computer program product runs on a computer, the computer is enabled to perform the method according to any one of claims 1 to 10.
